(19) Europäisches Patentamt
European Patent Office
Office européen des brevets

(11) EP 3 234 009 B1

(12) **EUROPEAN PATENT SPECIFICATION**

(45) Date of publication and mention of the grant of the patent:
**28.08.2019 Bulletin 2019/35**

(21) Application number: **15797974.1**

(22) Date of filing: **17.11.2015**

(51) Int Cl.:
***C08L 23/20*** *(2006.01)* ***B65D 41/00*** *(2006.01)*
***B65D 41/04*** *(2006.01)*

(86) International application number:
**PCT/EP2015/076770**

(87) International publication number:
**WO 2016/096281 (23.06.2016 Gazette 2016/25)**

(54) **SOFT AND FLEXIBLE POLYOLEFIN COMPOSITION**

WEICHE UND FLEXIBLE POLYOLEFINZUSAMMENSETZUNG

COMPOSITION DE POLYOLÉFINE SOUPLE ET FLEXIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2014 EP 14199203**

(43) Date of publication of application:
**25.10.2017 Bulletin 2017/43**

(73) Proprietor: **Basell Poliolefine Italia S.r.l.**
**20121 Milano (IT)**

(72) Inventors:
- **MARCHINI, Roberta**
  **44122 Ferrara (IT)**
- **SPATARO, Stefano**
  **44122 Ferrara (IT)**
- **PASQUALI, Stefano**
  **44122 Ferrara (IT)**
- **MUSACCHI, Gianluca**
  **44122 Ferrara (IT)**

(74) Representative: **Gaverini, Gaetano Luigi Attilio et al**
**Basell Poliolefine Italia S.r.l.**
**Intellectual Property**
**P.le Donegani, 12**
**44122 Ferrara (IT)**

(56) References cited:
**EP-A1- 2 551 109**
**EP-A1- 2 631 271**
**WO-A1-2010/069775**
**WO-A1-2012/152803**
**US-A1- 2004 211 744**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present disclosure relates to a flexible and thermoplastic polyolefin composition having low values of shore hardness in combination with good tensile and elastic properties.

BACKGROUND OF THE INVENTION

Polyolefin compositions having high flexibility while maintaining a good thermoplastic behavior are disclosed in the art. They have been used in many application fields, due to the valued properties which are typical of polyolefins (such as chemical inertia, mechanical properties and nontoxicity).

They generally comprise crystalline and amorphous portions, in various relative amounts.

Such crystalline and amorphous portions can be present in the same polymer chain, and/or in distinct phases.

Depending upon the chemical composition of such portions, their relative amounts and the way in which they are combined in the polyolefin composition, different sets of properties are obtained.

However it is always difficult to achieve a good balance of flexibility, softness and thermoplastic behavior.

An example of flexible and thermoplastic composition is provided in PCT Publication No. WO2009080485, wherein low values of flexural modulus and Shore hardness are obtained by combining a crystalline copolymer of propylene and hexene-1 with a highly soluble, thus highly amorphous ethylene copolymer.

It has now been found that by combining specific butene-1 polymers with reduced amounts of propylene polymers, it is possible to obtain a flexible polyolefin composition having an excellent and unusual set of properties.

Such properties make it possible to use the compositions for preparing liners for closures, providing a tight and durable seal.

SUMMARY OF THE INVENTION

Thus the present invention provides a polyolefin composition having a melting enthalpy $\Delta H_{fus}$, measured by DSC (Differential Scanning Calorimetry) at the second heating scan, of from 7 to 30 J/g, preferably from 8 to 28 J/g, comprising:

A) from 63 to 78% by weight, preferably from 64 to 76% by weight, of a copolymer of butene-1 with ethylene having a copolymerized ethylene content of up to 18% by mole and no melting peak detectable at the DSC at the second heating scan;

B) from 22 to 37% by weight, preferably from 24 to 36% by weight, of (i) a propylene homopolymer, or (ii) a propylene copolymer, or (iii) a mixture of two or more of (i) and (ii), having a melting temperature $T_m$, measured by DSC at the second heating scan, of from 130°C to 165°C, preferably from 131 to 165°C, more preferably from 131 to 160°C;

wherein the amounts of A) and B) are referred to the total weight of A) + B) and the DSC second heating scan is carried out with a heating rate of 10°C per minute.

The composition provided herein has high softness (Shore A lower than 90), good tensile properties (elongation at break of 900 -1000%) and elastic properties (compression set at 22°C lower 50) while still maintaining a thermoplastic behavior due to the presence of a crystalline fraction, as revealed by the melting enthalpy values.

DETAILED DESCRIPTION OF THE INVENTION

The polyolefin composition as provided herein has low values of flexural modulus, preferably equal to or lower than 150 MPa, more preferably equal to or lower than 100 MPa in particular from 150 or from 100 to 20 MPa.

Particularly preferred relative amounts of the previously defined polymer components A) and B) are, due to the low compression set values achieved, of 69% by weight or lower of A) and of 31% by weight or higher of B), thus from 63 to 69% by weight of A) and from 31 to 37% of B), or from 64 to 69% by weight of A) and from 31 to 36% by weight of B), referred to the total weight of A) + B), even more preferably from 63 to 68% by weight of A) and from 32 to 37% of B), or from 64 to 68% by weight of A) and from 32 to 36% by weight of B), referred to the total weight of A) + B).

In combination with such preferred amounts, component B) is most preferably a propylene copolymer (i) or a mixture (iii) of a propylene homopolymer and a propylene copolymer.

The polyolefin compositions comprising from 70 to 78% by weight, preferably from 70 to 76% by weight of A) and from 22 to 30%, preferably from 24 to 30% of B), referred to the total weight of A) + B) are still particularly valuable in the preparation of extruded articles and in particular of liners for closures.

Moreover, the polyolefin composition as provided herein has a melting temperature $T_m$ which is equal or close to the melting temperature $T_m$ of the propylene homopolymer or copolymer component B), namely from 130°C to 165°C, preferably from 132 to 165°C, more preferably from 132 to 160°C.

Generally a single melting peak is detected in the second DSC scan of the propylene homopolymer or copolymer component B) and in the second DSC scan of the polyolefin composition in the said temperature range.

Should more than one peak be detected, the temperature of the most intense melting peak in the said temperature range is to be taken as the $T_m$ value for both component B) and the polyolefin composition comprising A) and B).

Thus the $\Delta H_{fus}$ value for the polyolefin composition as provided herein is preferably given by the area of the melting peak or the total area of melting peaks (if more than one) in the DSC temperature range from 130° to 160°C.

Preferred values of MIE for the said composition are from 0.5 to 8 g/10 min., where MIE is the melt flow index at 190°C with a load of 2.16 kg, determined according to ISO 1133.

Preferred Shore A values for the said compositions are of lower than 90, particularly equal to or lower than 88, the lower limit being of 70.

Correspondingly, the Shore D values are equal to or or lower than 20, in particular from 20 to 5, more preferably lower than 20, in particular from lower than 20 to 5.

The butene-1 copolymer component A) just after it has been melted and cooled does not show a melting peak at the second heating scan, however it is crystallizable, i.e. after about 10 days that it has been melted the polymer shows a measurable melting point and a melting enthalpy measured by DSC. In other words the butene-1 copolymer shows no melting temperature attributable to polybutene-1 crystallinity $(TmII)_{DSC}$, measured after cancelling the thermal history of the sample, according to the DSC method described herein below in the experimental part.

Moreover, the butene-1 copolymer component A) can have at least one of the following additional features:

- MIE of from 0.5 to 3 g/10 min.;
- a lower limit of the copolymerized ethylene content of 12% by mole;
- a Shore A value equal to or lower than 80, more preferably equal to or lower than 70, in particular from 80 to 40 or from 70 to 40;
- a Shore D value equal to or lower than 20, in particular from 20 to 5, more preferably lower than 20, in particular from lower than 20 to 5;
- a Mw/Mn value, where Mw is the weight average molar mass and Mn is the number average molar mass, both measured by GPC, equal to or lower than 3, in particular from 3 to 1.5.
- a tension set of less than 30% at 100% of deformation at 23°C (ISO 2285), more preferably equal to or less than 20%, wherein the lower limit is of 5;
- a percentage of butene-1 units in form of isotactic pentads (mmmm%) greater than 80%, preferably equal to or greater than 85%, even more preferably equal to or greater than 90%, wherein the upper limit is 99%;
- tensile stress at break, measured according to ISO 527, of from 3 MPa to 20 MPa, more preferably from 4 MPa to 13 MPa;
- tensile elongation at break, measured according to ISO 527, of from 550% to 1000%; more preferably from 700% to 1000%;
- intrinsic viscosity (I.V.) equal to or higher than 1dl/g; more preferably equal to or higher than 1.5 dl/g, wherein the upper limit is of 3 dl/g;
- crystallinity of less than 30% measured via X-ray, more preferably of less than 20%;
- density of 0.895 g/cm$^3$ or less, more preferably of 0.875 g/cm$^3$ or less; wherein the lower limit is of 0.86 g/cm$^3$;
- content of xylene insoluble fraction at 0°C of less than 15% by weight, wherein the lower limit is of 0%.

The butene-1 copolymer component A) can be obtained by polymerizing the monomer(s) in the presence of a metallocene catalyst system obtainable by contacting:

- a stereorigid metallocene compound;
- an alumoxane or a compound capable of forming an alkyl metallocene cation; and, optionally,
- an organo aluminum compound.

Preferably the stereorigid metallocene compound belongs to the following formula (I):

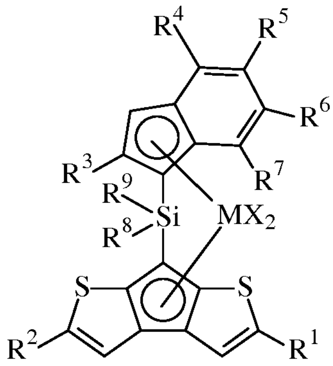

wherein:

M is an atom of a transition metal selected from those belonging to group 4; preferably M is zirconium;
X, equal to or different from each other, is a hydrogen atom, a halogen atom, a R, OR, OR'O, $OSO_2CF_3$, OCOR, SR, $NR_2$ or $PR_2$ group wherein R is a linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radical, optionally containing heteroatoms belonging to groups 13-17 of the Periodic Table of the Elements; and R' is a $C_1$-$C_{20}$-alkylidene, $C_6$-$C_{20}$-arylidene, $C_7$-$C_{20}$-alkylarylidene, or $C_7$-$C_{20}$-arylalkylidene radical; preferably X is a hydrogen atom, a halogen atom, a OR'O or R group; more preferably X is chlorine or a methyl radical;
$R^1$, $R^2$, $R^5$, $R^6$, $R^7$, $R^8$ and $R^9$, equal to or different from each other, are hydrogen atoms, or linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radicals, optionally containing heteroatoms belonging to groups 13-17 of the Periodic Table of the Elements; or $R^5$ and $R^6$, and/or $R^8$ and $R^9$ can optionally form a saturated or unsaturated, 5 or 6 membered rings, said ring can bear $C_1$-$C_{20}$ alkyl radicals as substituents; with the proviso that at least one of $R^6$ or $R^7$ is a linear or branched, saturated or unsaturated $C_1$-$C_{20}$-alkyl radical, optionally containing heteroatoms belonging to groups 13-17 of the Periodic Table of the Elements; preferably a $C_1$-$C_{10}$-alkyl radical;
$R^3$ and $R^4$, equal to or different from each other, are linear or branched, saturated or unsaturated $C_1$-$C_{20}$-alkyl radicals, optionally containing heteroatoms belonging to groups 13-17 of the Periodic Table of the Elements; preferably $R^3$ and $R^4$ equal to or different from each other are $C_1$-$C_{10}$-alkyl radicals; more preferably $R^3$ is a methyl, or ethyl radical; and $R^4$ is a methyl, ethyl or isopropyl radical.

Preferably the compounds of formula (I) have formula (Ia):

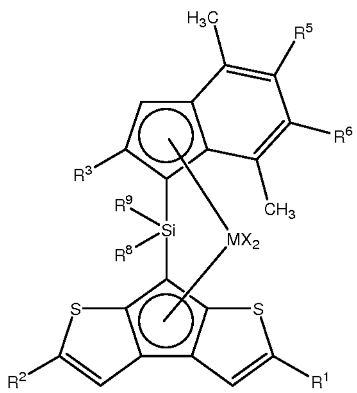

(Ia)

Wherein:

M, X, $R^1$, $R^2$, $R^5$, $R^6$, $R^8$ and $R^9$ have been described above;
$R^3$ is a linear or branched, saturated or unsaturated $C_1$-$C_{20}$-alkyl radical, optionally containing heteroatoms belonging to groups 13-17 of the Periodic Table of the Elements; preferably $R^3$ is a $C_1$-$C_{10}$-alkyl radical; more preferably $R^3$ is a methyl, or ethyl radical.

Specific examples of metallocene compounds are dimethylsilanediyl{(1-(2,4,7-trimethylindenyl)-7-(2,5-dimethyl-cyclopenta[1,2-b:4,3-b']-dithiophene)}Zirconium dichloride and dimethylsilanediyl{(1-(2,4,7-trimethylindenyl)-7-(2,5-dimethyl-cyclopenta[1,2-b:4,3-b']-dithiophene)}Zirconium dimethyl.

Examples of alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Examples of compounds able to form an alkylmetallocene cation are compounds of formula $D^+E^-$, wherein $D^+$ is a Brønsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be able to be removed by an olefinic monomer. Preferably, the anion $E^-$ comprises of one or more boron atoms.

Examples organo aluminum compound are trimethylaluminum (TMA), triisobutylaluminium (TIBAL), tris(2,4,4-trimethyl-pentyl)aluminum (TIOA), tris(2,3-dimethylbutyl)aluminium (TDMBA) and tris(2,3,3-trimethylbutyl)aluminum (TTMBA).

Examples of the said catalyst system and of polymerization processes employing such catalyst system can be found in WO2004099269 and WO2009000637.

In general, the polymerization process for the preparation of the butene-1 copolymer component A) can be carried out according to known techniques, for example slurry polymerization using as diluent a liquid inert hydrocarbon, or solution polymerization using for example the liquid butene-1 as a reaction medium. Moreover, it may also be possible to carry out the polymerization process in the gas-phase, operating in one or more fluidized bed or mechanically agitated reactors. The polymerization carried out in the liquid butene-1 as a reaction medium is preferred.

As a general rule, the polymerization temperature is generally of from -100°C to 200°C, preferably from 20°C to 120°C, more preferably from 40°C to 90°C, most preferably from 50°C to 80°C.

The polymerization pressure is generally comprised between 0.5 and 100 bar.
The polymerization can be carried out in one or more reactors that can work under same or different reaction conditions such as concentration of molecular weight regulator, comonomer concentration, temperature, pressure etc.

The propylene homopolymer or copolymer component B) is a semicrystalline polymer, as demonstrated by the said melting point values, and has a stereoregularity of isotactic type.

It has preferably a solubility in xylene at room temperature (about 25°C) equal to or lower than 25% by weight, the lower limit being of 0.5% by weight.

Moreover it has preferably MIL values of from 0.5 to 9 g/10 min, more preferably from 1 to 8 g/10 min., where MIL is the melt flow index at 230°C with a load of 2.16 kg, determined according to ISO 1133.

Preferred examples of copolymers B) are the copolymers of propylene with one or more comonomers selected from ethylene, $C_4$-$C_{10}$ alpha-olefins and their combinations.

From the above definition it is evident that the term "copolymer" includes polymers containing more than one kind of comonomers.

Preferred amounts of comonomers in B) are of from 1 to 15% by weight, in particular from 2 to 10% by weight, referred to the weight of the concerned copolymer.

The said $C_4$-$C_{10}$ alpha-olefins are selected from olefins having formula $CH_2$=CHR wherein R is an alkyl radical, linear or branched, or an aryl radical, having from 2 to 8 carbon atoms.

Specific examples of $C_4$-$C_{10}$ alpha-olefins are butene-1, pentene-1, 4-methylpentene-1, hexene-1 and octene-1.

The preferred comonomers in the propylene copolymer B) are ethylene, butene-1 and hexene-1.

The propylene homopolymer or copolymer component B) can be prepared by using a Ziegler-Natta catalyst or a metallocene-based catalyst system in the polymerization process.

Typically a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus preferred Ziegler-Natta catalysts are those comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1_aR^2_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.

Useful examples of silicon compounds are (tert-butyl)$_2$Si(OCH$_3$)$_2$, (cyclohexyl)(methyl)Si (OCH$_3$)$_2$, (phenyl)$_2$Si(OCH$_3$)$_2$ and (cyclopentyl)$_2$Si(OCH$_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in suspension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The polymerization process, which can be continuous or batch, is carried out in the presence of said catalysts following known techniques and operating in liquid phase, in the presence or not of inert diluent, or in gas phase, or by mixed liquid-gas techniques.

Polymerization reaction time, pressure and temperature are not critical, however it is best if the temperature is from 20 to 100°C. The pressure can be atmospheric or higher.

The regulation of the molecular weight, resulting into the said MFR values, is carried out by using known regulators, hydrogen in particular.

Preferred examples of metallocene-based catalyst systems are disclosed in US20060020096 and WO98040419.

The polymerization conditions for preparing the homopolymer or copolymer component B) with metallocene-based catalyst systems in general do not need to be different from those used with Ziegler-Natta catalysts.

The polyolefin composition of the present invention can also contain additives commonly employed in the art, such as antioxidants, light stabilizers, heat stabilizers, colorants and fillers.

It can also contain additional polyolefins, in particular crystalline ethylene homopolymers and copolymers of ethylene with propylene and/or a $C_4$-$C_{10}$ $\alpha$-olefin, such as HDPE, LLDPE or LDPE.

Other additional polyolefins than can be present are elastomeric copolymers, like copolymers of ethylene with propylene and/or higher alpha-olefins, like in particular butene-1, hexene-1 or octene-1. Such copolymer materials are commonly known as EPR or EPDM copolymers.

Preferred amounts of said additional polyolefins are from 1 to 10% by weight, more preferably from 3 to 7% by weight with respect to the total weight of the polyolefin composition.

The polyolefin composition may be manufactured by mixing the components together, extruding the mixture, and pelletizing the resulting composition using known techniques and apparatus.

The present invention also provides final articles made of or comprising the said polyolefin composition.

Such articles are soft and flexible.

In general, the polyolefin compositions of the present invention are suited for preparing final articles by extrusion, with equipment and processes well known in the art.

Specific examples of such final articles are liners, in particular liners for closures, preferably plastic and/or metal closures.

The liners for closures are widely used in twist closures for containers like jars and bottles, generally made of glass or plastic materials.

The twist closures are commonly in form of caps of circular shape, generally made of metal or plastics, hosting the liner on the inner surface facing the opening in the threaded circular neck of the container.

The liner is used to achieve a tight seal on the rim of the opening.
By twisting (rotating) the closure it is thus possible to close and open the container.
However, the Press-on/Twist-off® caps are first pressed on the container to close it by elastic deformation of the liner against the threading elements of the neck of the container, and then twisted to open.
So, depending upon the type of closure, the liner can have various kinds of shapes and functions.
In particular, while it generally has a sealing function, in the Press-on/Twist-off® caps it has both a sealing and a holding function.
In other kinds of closures, the holding function is performed by threads or lugs in the body of the closure itself.
Moreover, depending upon the use of the container, the closures are subject to different and often demanding requirements, in the fulfillment of which a critical role is played by the gasket.
The said closures are particularly for use in food and pharmaceutical packaging.
By using the polyolefin composition of the invention, air and liquid tight liners are obtained.
Such liners, due to their content of crystalline polymer are also able to withstand high temperature treatments (sterilization).
In general, liners are prepared from the polyolefin composition of the invention by a process comprising the following steps:

a) laying down the polyolefin composition in the molten state on the inner surface of the closure;
b) forming the laid polyolefin composition.

The above defined step a) is generally carried out by using extruders and metering devices well known in the art, so to achieve a controlled laying down of the polyolefin composition. For "controlled" it is meant that amount and shape of the laid material are controlled.
Extrusion temperatures generally applied in step a) are from 160 to 220°C.
Before carrying out the step a), the inner surface of the closure can be coated with a protective film of a varnish or a lacquer.
The above defined step b) is carried out by compression molding the molten polyolefin composition against the inner surface of the closure.
The above described processes and equipment are well known in the art, as disclosed, for example, in US5451360.
The resulting liners can have different shapes, like in particular "o-ring" or flat film of variable thickness depending upon the final use of the closure.
From the previously described properties of the polyolefin composition of the invention, from which the gasket are obtained, it is immediately evident that such liners are soft and elastic, hence they provide a tight and durable seal even after long use.
Another important advantage is that the said properties are obtained without adding softening agents. Such softening agents are in general made of low molecular weight materials, like mineral oils, and are easily extractable by contact with free fat/oil components of foods, for instance.
Such liners, due to their content of crystalline polymer are also able to withstand high temperature treatments (sterilization) which generally occurs at temperatures of 110-125°C.

EXAMPLES

The practice and advantages of the various embodiments, compositions and methods as provided herein are disclosed below in the following examples. These Examples are illustrative only, and are not intended to limit the scope of the invention in any manner whatsoever.
The following analytical methods are used to characterize the polymer compositions.

Thermal properties (melting temperatures and enthalpies)

Determined by Differential Scanning Calorimetry (DSC) on a Perkin Elmer DSC-7 instrument.
The melting temperatures of the butene-1 copolymer A) were determined according to the following method:

- TmII (measured in second heating scan): a weighted sample (5-10 mg) obtained from the polymerization was sealed into aluminum pans and heated at 200°C with a scanning speed corresponding to 10°C/minute. The sample was kept at 200°C for 5 minutes to allow a complete melting of all the crystallites thus cancelling the thermal history of the sample. Successively, after cooling to -20°C with a scanning speed corresponding to 10°C/minute, the peak temperature was taken as crystallization temperature ($T_c$). After standing 5 minutes at -20°C, the sample was heated

for the second time at 200°C with a scanning speed corresponding to 10°C/min. In this second heating run, the peak temperature, when present is taken as the melting temperature of the polybutene-1 (PB) crystalline form II (TmII) and the area as global melting enthalpy (ΔHfII).
The butene-1 copolymer component A) of the polyolefin composition of the invention does not have a TmII peak.
- In order to determine the TmI, the sample was melted, kept at 200°C for 5 minutes and then cooled down to 20°C with a cooling rate of 10°C/min.

The sample was then stored for 10 days at room temperature. After 10 days the sample was subjected to DSC, it was cooled to -20°C, and then it was heated at 200°C with a scanning speed corresponding to 10°C/min. In this heating run, the first peak temperature coming from the lower temperature side in the thermogram was taken as the melting temperature (TmI).
The melting temperatures of the propylene homopolymer or copolymer component B) and of the overall composition comprising the polymer components A) and B) were measured at the second heating scan under the same conditions as above reported for the determination of TmII of the butene-1 copolymer component A).
Both component B) and the overall composition of the examples show a single melting peak between 130 and 165°C, corresponding to the melting temperature $T_m$.
The area of such melting peak of the overall composition is taken as the melting enthalpy $\Delta H_{fus}$ of the polyolefin composition.

Flexural elastic modulus

According to norm ISO 178, measured 10 days after molding.

Shore A and D

According to norm ISO 868, measured 10 days after molding.

Tensile stress and elongation at break

According to norm ISO 527 on compression molded plaques, measured 10 days after molding.

Tension set

According to norm ISO 2285, measured 10 days after molding.

Compression set

According to norm ISO 815, measured 10 days after molding;

MIE

Determined according to norm ISO 1133 with a load of 2.16 kg at 190 °C.

MIL

Determined according to norm ISO 1133 with a load of 2.16 kg at 230 °C.

Intrinsic viscosity

Determined according to norm ASTM D 2857 in tetrahydronaphthalene at 135 °C.

Density

Determined according to norm ISO 1183 at 23°C.

Comonomer contents

Determined by IR spectroscopy or by NMR.

Particularly for the butene-1 copolymers the amount of comonomer is calculated from $^{13}C$-NMR spectra of the copolymers. Measurements were performed on a polymer solution (8-12 wt%) in dideuterated 1,1,2,2-tetrachloro-ethane at 120 °C. The $^{13}C$ NMR spectra were acquired on a Bruker AV-600 spectrometer operating at 150.91 MHz in the Fourier transform mode at 120 °C using a 90° pulse, 15 seconds of delay between pulses and CPD (WALTZ16) to remove $^{1}H$-$^{13}C$ coupling. About 1500 transients were stored in 32K data points using a spectral window of 60 ppm (0-60 ppm).

Copolymer Composition

Diad distribution is calculated from $^{13}C$ NMR spectra using the following relations:

- $PP = 100\ I_1/\Sigma$
- $PB = 100\ I_2/\Sigma$
- $BB = 100\ (I_3 - I_{19})/\Sigma$
- $PE = 100\ (I_5 + I_6)/\Sigma$
- $BE =100\ (I_9 + I_{10})/\Sigma$
- $EE = 100\ (0.5(I_{15} + I_6 + I_{10}) + 0.25\ (I_{14}))/\Sigma$
- Where $\Sigma = I_1 + I_2 + I_3 - I_{19} + I_5 + I_6 + I_9 + I_{10} + 0.5(I_{15} + I_6 + I_{10}) + 0.25\ (I_{14})$
- The molar content is obtained from diads using the following relations:
- P (m%)= PP + 0.5 (PE+PB)
- B (m%)= BB + 0.5 (BE+PB)
- E (m%)= EE + 0.5 (PE+BE)

$I_1$, $I_2$, $I_3$, $I_5$, $I_6$, $I_9$, $I_6$, $I_{10}$, $I_{14}$, $I_{15}$, $I_{19}$ are integrals of the peaks in the $^{13}C$ NMR spectrum (peak of EEE sequence at 29.9 ppm as reference). The assignments of these peaks are made according to J.C. Randal, Macromol. Chem Phys., C29, 201 (1989), M. Kakugo, Y. Naito, K. Mizunuma and T. Miyatake, Macromolecules, 15, 1150, (1982), and H.N. Cheng, Journal of Polymer Science, Polymer Physics Edition, 21, 57 (1983). They are collected in Table A (nomenclature according to C.J. Carman, R.A. Harrington and C.E. Wilkes, Macromolecules, 10, 536 (1977)).

**Table A.**

| I | Chemical Shift (ppm) | Carbon | Sequence |
|---|---|---|---|
| 1 | 47.34 - 45.60 | $S_{\alpha\alpha}$ | PP |
| 2 | 44.07 - 42.15 | $S_{\alpha\alpha}$ | PB |
| 3 | 40.10 - 39.12 | $S_{\alpha\alpha}$ | BB |
| 4 | 39.59 | $T_{\delta\delta}$ | EBE |
| 5 | 38.66 - 37.66 | $S_{\alpha\gamma}$ | PEP |
| 6 | 37.66 - 37.32 | $S_{\alpha\delta}$ | PEE |
| 7 | 37.24 | $T_{\beta\delta}$ | BBE |
| 8 | 35.22 - 34.85 | $T_{\beta\beta}$ | XBX |
| 9 | 34.85 - 34.49 | $S_{\alpha\gamma}$ | BBE |
| 10 | 34.49 - 34.00 | $S_{\alpha\delta}$ | BEE |
| 11 | 33.17 | $T_{\delta\delta}$ | EPE |
| 12 | 30.91 - 30.82 | $T_{\beta\delta}$ | XPE |
| 13 | 30.78 - 30.62 | $S_{\gamma\gamma}$ | XEEX |
| 14 | 30.52 - 30.14 | $S_{\gamma\delta}$ | XEEE |
| 15 | 29.87 | $S_{\delta\delta}$ | EEE |
| 16 | 28.76 | $T_{\beta\beta}$ | XPX |
| 17 | 28.28 - 27.54 | $2B_2$ | XBX |
| 18 | 27.54 - 26.81 | $S_{\beta\delta} + 2B_2$ | BE, PE, BBE |
| 19 | 26.67 | $2B_2$ | EBE |

(continued)

| I | Chemical Shift (ppm) | Carbon | Sequence |
|---|---|---|---|
| **20** | 24.64 - 24.14 | $S_{\beta\beta}$ | XEX |
| **21** | 21.80 - 19.50 | $CH_3$ | P |
| **22** | 11.01 - 10.79 | $CH_3$ | B |

For the propylene copolymers the comonomer content is determined by infrared spectroscopy by collecting the IR spectrum of the sample vs. an air background with a Fourier Transform Infrared spectrometer (FTIR). The instrument data acquisition parameters are:

- purge time: 30 seconds minimum;
- collect time: 3 minutes minimum;
- apodization: Happ-Genzel;
- resolution: 2 $cm^{-1}$.

Sample Preparation

Using a hydraulic press, a thick sheet is obtained by pressing about g 1 of sample between two aluminum foils. If homogeneity is in question, a minimum of two pressing operations are recommended. A small portion is cut from this sheet to mold a film. Recommended film thickness ranges between 0.02-:0.05 cm (8 - 20 mils).
Pressing temperature is 180$\pm$10°C (356°F) and about 10 kg/$cm^2$ (142.2 PSI) pressure for about one minute. Then the pressure is released and the sample is removed from the press and cooled the to room temperature.
The spectrum of a pressed film of the polymer is recorded in absorbance vs. wavenumbers ($cm^{-1}$). The following measurements are used to calculate ethylene and butene-1 content:

- Area (At) of the combination absorption bands between 4482 and 3950 $cm^{-1}$ which is used for spectrometric normalization of film thickness.
- If ethylene is present, Area (AC2) of the absorption band between 750-700 $cm^{-1}$ after two proper consecutive spectroscopic subtractions of an isotactic non additivated polypropylene spectrum and then, if butene-1 is present, of a reference spectrum of a butene-1-propylene random copolymer in the range 800-690 $cm^{-1}$.
- If butene-1 is present, Height (DC4) of the absorption band at 769 $cm^{-1}$ (maximum value), after two proper consecutive spectroscopic subtractions of an isotactic non additivated polypropylene spectrum and then, if ethylene is present, of a reference spectrum of an ethylene-propylene random copolymer in the range 800-690 $cm^{-1}$.

In order to calculate the ethylene and butene-lcontent, calibration straight lines for ethylene and butene-1 obtained by using samples of known amount of ethylene and butene-1 are needed.

Mw/Mn determination by GPC

The determination of the means Mn and Mw, and Mw/Mn derived therefrom was carried out using a Waters GPCV 2000 apparatus, which was equipped with a column set of four PLgel Olexis mixed-gel (Polymer Laboratories) and an IR4 infrared detector (PolymerChar). The dimensions of the columns were 300 $\times$ 7.5 mm and their particle size 13 $\mu$m. The mobile phase used was 1-2-4-trichlorobenzene (TCB) and its flow rate was kept at 1.0 ml/min. All the measurements were carried out at 150°C. Solution concentrations were 0.1 g/dl in TCB and 0.1 g/l of 2,6-diterbuthyl-*p*-chresole were added to prevent degradation. For GPC calculation, a universal calibration curve was obtained using 10 polystyrene (PS) standard samples supplied by Polymer Laboratories (peak molecular weights ranging from 580 to 8500000). A third order polynomial fit was used for interpolate the experimental data and obtain the relevant calibration curve. Data acquisition and processing was done using Empower (Waters). The Mark-Houwink relationship was used to determine the molecular weight distribution and the relevant average molecular weights: the $K$ values were $K_{PS}$ = 1.21 $\times$ $10^{-4}$ dL/g and $K_{PB}$ = 1.78 $\times$ $10^{-4}$ dL/g for PS and PB respectively, while the Mark-Houwink exponents $\alpha$ = 0.706 for PS and $\alpha$ = 0.725 for PB were used.
For butene-1/ethylene copolymers, as far as the data evaluation is concerned, it is assumed that the composition is constant in the whole range of molecular weight and the $K$ value of the Mark-Houwink relationship is calculated using a linear combination as reported below:

$$K_{EB} = x_E K_{PE} + x_P K_{PB}$$

where $K_{EB}$ is the constant of the copolymer, $K_{PE}$ (4.06 × $10^{-4}$, dL/g) and $Kp_B$ (1.78 × $10^{-4}$ dl/g) are the constants of polyethylene and polybutene, $x_E$ and $x_B$ are the ethylene and the butene-1 weight% content. The Mark-Houwink exponents $\alpha$ = 0.725 is used for all the butene-1/ethylene copolymers independently of their composition.

Fractions soluble and insoluble in xylene at 0°C (XS-0°C)

2.5 g of the polymer sample are dissolved in 250 ml of xylene at 135°C under agitation. After 30 minutes the solution is allowed to cool to 100°C, still under agitation, and then placed in a water and ice bath to cool down to 0°C. Then, the solution is allowed to settle for 1 hour in the water and ice bath. The precipitate is filtered with filter paper. During the filtering, the flask is left in the water and ice bath so as to keep the flask inner temperature as near to 0°C as possible. Once the filtering is finished, the filtrate temperature is balanced at 25°C, dipping the volumetric flask in a water-flowing bath for about 30 minutes and then, divided in two 50 ml aliquots. The solution aliquots are evaporated in nitrogen flow, and the residue dried under vacuum at 80° C until constant weight is reached. The weight difference in between the two residues must be lower than 3%; otherwise the test has to be repeated. Thus, one calculates the percent by weight of polymer soluble (Xylene Solubles at 0°C = XS 0°C) from the average weight of the residues. The insoluble fraction in o-xylene at 0°C (xylene Insolubles at 0°C = XI%0°C) is:

$$XI\%0°C=100-XS\%0°C.$$

Fractions soluble and insoluble in xylene at 25 °C (XS-25°C)

2.5 g of polymer are dissolved in 250 ml of xylene at 135° C under agitation. After 20 minutes the solution is allowed to cool to 25° C, still under agitation, and then allowed to settle for 30 minutes. The precipitate is filtered with filter paper, the solution evaporated in nitrogen flow, and the residue dried under vacuum at 80° C until constant weight is reached. Thus, one calculates the percent by weight of polymer soluble (Xylene Solubles - XS) and insoluble at room temperature (25° C).

The percent by weight of polymer insoluble in xylene at room temperature (25°C) is considered the isotactic index of the polymer. This value corresponds substantially to the isotactic index determined by extraction with boiling n-heptane, which by definition constitutes the isotactic index of polypropylene polymers.

Determination of isotactic pentads content

50 mg of each sample were dissolved in 0.5 ml of $C_2D_2Cl_4$.

The $^{13}C$ NMR spectra were acquired on a Bruker DPX-400 (100.61 Mhz, 90° pulse, 12s delay between pulses). About 3000 transients were stored for each spectrum; the mmmm pentad peak (27.73 ppm) was used as reference.

The microstructure analysis was carried out as described in literature (Macromolecules 1991, 24, 2334-2340, by Asakura T. et Al.. and Polymer, 1994, 35, 339, by Chujo R. et Al.).

The percentage value of pentad tacticity (mmmm%) for butene-1 copolymers is the percentage of stereoregular pentads (isotactic pentad) as calculated from the relevant pentad signals (peak areas) in the NMR region of branched methylene carbons (around 27.73 ppm assigned to the BBBBB isotactic sequence), with due consideration of the superposition between stereoirregular pentads and of those signals, falling in the same region, due to the comonomer.

Determination of X-ray crystallinity

The X-ray crystallinity was measured with an X-ray Diffraction Powder Diffractometer using the Cu-K$\alpha$1 radiation with fixed slits and collecting spectra between diffraction angle 2$\Theta$ = 5° and 2$\Theta$ = 35° with step of 0.1° every 6 seconds.

Measurements were performed on compression molded specimens in the form of disks of about 1.5-2.5 mm of thickness and 2.5-4.0 cm of diameter. These specimens are obtained in a compression molding press at a temperature of 200°C ± 5°C without any appreciable applied pressure for 10 minutes, then applying a pressure of about 10Kg/$cm^2$ for about few second and repeating this last operation for 3 times.

The diffraction pattern was used to derive all the components necessary for the degree of crystallinity by defining a suitable linear baseline for the whole spectrum and calculating the total area (Ta), expressed in counts/sec·2$\Theta$, between the spectrum profile and the baseline. Then a suitable amorphous profile was defined, along the whole spectrum, that separate, according to the two phase model, the amorphous regions from the crystalline ones. Thus it is possible to

calculate the amorphous area (Aa), expressed in counts/sec·2Θ, as the area between the amorphous profile and the baseline; and the crystalline area (Ca), expressed in counts/sec·2Θ, as Ca = Ta- Aa
The degree of crystallinity of the sample was then calculated according to the formula:

$$\%Cr = 100 \times Ca / Ta$$

## Examples 1-4 and Comparative Example 1

Materials used in the examples

PB-1: butene-1/ethylene copolymer containing 16% by moles of copolymerized ethylene, produced according to the process described in WO2009000637 and in-line blended with a propylene copolymer composition (I) added in amount of 7% by weight with respect to the total weight of the butene-1/ethylene copolymer and the propylene copolymer composition (I).
Such propylene copolymer composition (I) has MFRL of 5.5 g/10 min., total copolymerized ethylene content of 3% by weight, total copolymerized butene-1 content of 6% by weight; XS-25°C of 19% by weight and $T_m$ of 133°C, and is made of the following two components:

I') 35% by weight of a copolymer of propylene with ethylene (3.2% by weight in the copolymer), and
I") 65% by weight of a copolymer of propylene with ethylene (3.2% by weight in the copolymer) and butene-1 (6% by weight in the copolymer);
wherein the amounts of I') and I") are referred to the total weight of I') + I");

PP-1: propylene homopolymer having $T_m$ of 158°C, MFRL of about 7 g/10 min., XS-25°C of 3% by weight;
PP-2: copolymer of propylene with ethylene, containing 6% by weight of ethylene, having $T_m$ of 133°C, MFRL of about 7 g/10 min., XS-25°C of 20% by weight;
Stabilizers: blend of 0.05% by weight of pentaerythritol tetrakis(3-(3,5-di-tert-butyl-4-hydroxyphenyl)propionate (Irganox® 1010, sold by BASF) and 0.05% by weight of tris (2.4-di-tert-butylphenyl) phosphite (Irgafos® 168, sold by BASF), said percent amounts being referred to the total weight of the polyolefin composition;
Lubricants: blend of 1% by weight of erucamide (Crodamide® ER, sold by Croda), 1% by weight of Oleamide (Crodamide® OR, sold by Croda) and 1% by weight of Glyceryl Stearate (Atmer® 129, sold by Croda), said percent amounts being referred to the total weight of the polyolefin composition;
Pigment: Titanium dioxide Ti-Pure® R-104, sold by DuPont.

Due to the reduced content of propylene polymers, no melting peak is detected in the DSC analysis (second scan) of the above described PB-1.
The said materials are melt-blended in a co-rotating twin screw extruder Coperion ZSK40SC, with screw diameter of 40 mm and screw length/diameter ratio of 43:1, under the following conditions:

- extrusion temperature of 180-200°C;
- screw rotation speed of 220 rpm;
- production rate of 60 kg/hour.

The properties of the so obtained final compositions are reported in Table 1.
In Table 1 are also reported the properties of the above described PB-1 for comparison purpose (Comparison Example 1).

Table I

| Example | | 1 | 2 | 3 | 4 | Comp. 1 |
|---|---|---|---|---|---|---|
| PB-1 | Weight % | 72.1 | 72.1 | 69.7 | 67.61 | 100 |
| PP-1 | Weight % | 24.0 | - | - | - | - |
| PP-2 | Weight % | - | 24.0 | 26.9 | 29.0 | - |

(continued)

| Example | | 1 | 2 | 3 | 4 | Comp. 1 |
|---|---|---|---|---|---|---|
| Stabilizers | Weight % | 0.1 | 0.1 | 0.1 | 0.1 | - |
| Lubricants | Weight % | 3 | 3 | 3 | 3 | - |
| Pigment | Weight % | 0.8 | 0.8 | 0.3 | 0.3 | - |
| Amount of A)* | Weight % | 69.8 | 69.8 | 67.1 | 65.1 | 93 |
| Amount of B)* | Weight % | 30.2 | 30.2 | 32.9 | 34.9 | 7 |
| **Composition Properties** | | | | | | |
| $\Delta H_{fus}$ | J/g | 25 | 10.8 | 12.4 | 11.5 | 0 |
| $T_m$ | °C | 159.1 | 132.3 | 132.8 | 133.6 | - |
| Shore A | | 87.2 | 78.8 | 81 | 83.5 | 60 |
| Shore D | | 22.8 | 20 | 19 | 21.8 | < 20 |
| Flexural Modulus | MPa | | 40 | 40 | 40 | < 10 |
| MIE | gr/10' | 2.14 | 2.07 | 1.75 | 3.65 | 1.4 |
| Stress at Break | MPa | 16.4 | 14.9 | 16.6 | 15.2 | 11 |
| Elongation at Break | % | 1000 | 1010 | 990 | 1100 | 790 |
| Compression Set 22 hours 23°C after 10 min. in Autoclave | % | 55 | 47 | 49 | 44 | 32 |
| Compression Set 22 hours 70°C after10 min. in Autoclave | % | 79 | 84 | 72 | 71 | 100 |
| Compression Set 22 hours 100°C after 10 min. in Autoclave | % | 88 | 88 | | | 100 |
| Note: * weight % with respect to the total weight of A) + B). | | | | | | |

## Claims

**1.** A polyolefin composition having a melting enthalpy $\Delta H_{fus}$, measured by DSC at the second heating scan, of from 7 to 30 J/g, preferably from 8 to 28 J/g, comprising:

A) from 63 to 78% by weight, preferably from 64 to 76% by weight, of a copolymer of butene-1 with ethylene having a copolymerized ethylene content of up to 18% by mole and no melting peak detectable at the DSC at the second heating scan;
B) from 22 to 37% by weight, preferably from 24 to 36% by weight, of (i) a propylene homopolymer, or (ii) a propylene copolymer, or (iii) a mixture of two or more of (i) and (ii), having a melting temperature $T_m$, measured by DSC at the second heating scan, of from 130°C to 165°C, preferably from 131 to 165°C, more preferably from 131 to 160°C;

wherein the amounts of A) and B) are referred to the total weight of A) + B) and the DSC second heating scan is carried out with a heating rate of 10°C per minute.

**2.** The polyolefin composition of claim 1, having MIE of from 0.5 to 3 g/10 min., where MIE is the melt flow index at 190°C with a load of 2.16 kg, determined according to ISO 1133.

**3.** The polyolefin composition of claims 1 and 2, having flexural modulus equal to or lower than 150 MPa.

**4.** The polyolefin composition of claims 1 and 2, wherein the butene-1 copolymer component A) has Shore A equal to or lower than 80.

**5.** The polyolefin composition of claims 1 and 2, comprising from 63 to 69% by weight of A) and from 31 to 37% by weight of B).

**6.** The polyolefin composition of claim 1, wherein the butene-1 copolymer component A) has at least one of the following additional features:

- MIE of from 0.5 to 3 g/10 min.;
- a lower limit of the copolymerized ethylene content of 12% by mole;
- a Shore A value equal to or lower than 80, in particular from 80 to 40;
- a Shore D value equal to or lower than 20, in particular from 20 to 5;
- a Mw/Mn value, where Mw is the weight average molar mass and Mn is the number average molar mass, both measured by GPC, equal to or lower than 3, in particular from 3 to 1.5.
- a tension set of less than 30% at 100% of deformation at 23°C (ISO 2285), more preferably equal to or less than 20%;
- a percentage of butene-1 units in form of isotactic pentads (mmmm%) greater than 80%, preferably equal to or greater than 85%, even more preferably equal to or greater than 90%;
- tensile stress at break, measured according to ISO 527, of from 3 MPa to 20 MPa, more preferably from 4 MPa to 13 MPa;
- tensile elongation at break, measured according to ISO 527, of from 550% to 1000%; more preferably from 700% to 1000%;
- intrinsic viscosity (I.V.) equal to or higher than 1dl/g; more preferably equal to or higher than 1.5 dl/g, wherein the upper limit is of 3 dl/g;
- crystallinity of less than 30% measured via X-ray, more preferably of less than 20%;
- density of 0.895 g/cm$^3$ or less, more preferably of 0.875 g/cm$^3$ or less;
- content of xylene insoluble fraction at 0°C of less than 15% by weight.

**7.** The polyolefin composition of claim 1, wherein propylene homopolymer or copolymer component B) has MIL values of from 0.5 to 9 g/10 min, preferably from 1 to 8 g/10 min., where MIL is the melt flow rate at 230°C with a load of 2.6 kg, determined according to ISO 1133.

**8.** A formed articles comprising the polyolefin composition of claims 1 to 7.

**9.** Formed article according to claim 8, in form of liner.

**10.** A twist closure comprising the liner of claim 9.

**11.** The twist closure of claim 10, for use in food containers.

**12.** The twist closure of claims 10 or 11, in form of Press-on/Twist-off cap.

**13.** A process for preparing the liner of claim 9, comprising the following steps:

a) laying down the polyolefin composition in the molten state on the inner surface of the closure;
b) forming the laid polyolefin composition.

**Patentansprüche**

**1.** Polyolefinzusammensetzung mit einer Schmelzenthalpie $\Delta H_{fus}$, gemessen mittels DSC beim zweiten Heizscan, von 7 bis 30 J/g, vorzugsweise von 8 bis 28 J/g, umfassend:

A) 63 bis 78 Gew.%, vorzugsweise 64 bis 76 Gew.% eines Copolymers von Buten-1 mit Ethylen, das einen Gehalt an copolymerisiertem Ethylen von bis zu 18 Mol.% und keinen im DSC-Scan beim zweiten Erwärmen detektierbaren Schmelzpeak aufweist;
B) 22 bis 37 Gew.%, vorzugsweise 24 bis 36 Gew.% von (i) einem Propylenhomopolymer oder (ii) einem Propylencopolymer oder (iii) einer Mischung von zwei oder mehr von (i) und (ii), mit einer Schmelztemperatur $T_m$, gemessen im DSC-Scan beim zweiten Erwärmen, von 130 °C bis 165 °C, vorzugsweise von 131 bis 165 °C, bevorzugter 131 bis 160 °C;

wobei die Mengen an A) und B) sich auf das Gesamtgewicht von A) + B) beziehen und das zweite Erwärmen im DSC-Scan mit einer Heizrate von 10 °C pro Minute durchgeführt wird.

2. Polyolefinzusammensetzung nach Anspruch 1 mit einem MIE-Wert von 0,5 bis 3 g/10 min, wobei MIE der Schmelzflussindex bei 190 °C unter einer Last von 2,16 kg ist, bestimmt gemäß ISO 1133.

3. Polyolefinzusammensetzung nach den Ansprüchen 1 und 2 mit einem Biegemodul gleich oder niedriger als 150 MPa.

4. Polyolefinzusammensetzung nach den Ansprüchen 1 und 2, wobei die Buten-1-Copolymerkomponente A) eine Shore A-Härte gleich oder kleiner als 80 aufweist.

5. Polyolefinzusammensetzung nach den Ansprüchen 1 und 2, umfassend 63 bis 69 Gew.% A) und 31 bis 37 Gew.% B).

6. Polyolefinzusammensetzung nach Anspruch 1, wobei die Buten-1-Copolymerkomponente A) mindestens eines der folgenden zusätzlichen Merkmale aufweist:

- einen MIE von 0,5 bis 3 g/10 min.;
- eine untere Grenze des Gehalts an copolymerisiertem Ethylen von 12 Mol.%;
- einen Shore A-Wert gleich oder kleiner als 80, insbesondere 80 bis 40;
- einen Shore D-Wert gleich oder kleiner als 20, insbesondere 20 bis 5;
- einen Wert für Mw/Mn, wobei Mw das durchschnittliche Molekulargewicht (Gewichtsmittel) ist und Mn das durchschnittliche Molekulargewicht (Zahlenmittel) ist, wobei beide mittels GPC gemessen werden, gleich oder kleiner als 3, insbesondere 3 bis 1,5;
- einen Zugverformungsrest kleiner als 30 % bei 100 % Formänderung bei 23 °C (ISO 2285), insbesondere gleich oder kleiner als 20 %;
- einen Prozentsatz an Buten-1-Einheiten in Form von isotaktischen Pentaden (mmmm%) größer als 80 %, vorzugsweise gleich oder größer als 85 %, noch bevorzugter gleich oder größer als 90 %;
- eine Zugspannung bei Bruch, gemessen gemäß ISO 527, von 3 MPa bis 20 MPa, bevorzugter 4 MPa bis 13 MPa;
- eine Zugdehnung bei Bruch, gemessen gemäß ISO 527, von 550 % bis 1000 %, bevorzugter 700 % bis 1000 %;
- eine Grenzviskosität (I.V.) gleich oder größer als 1 dl/g; bevorzugter gleich oder größer als 1,5 dl/g, wobei die Obergrenze 3 dl/g beträgt;
- eine Kristallinität von weniger als 30 %, gemessen mittels Röntgen, bevorzugter weniger als 20 %.;
- eine Dichte von 0,895 $g/cm^3$ oder weniger, bevorzugter 0,875 $g/cm^3$ oder weniger;
- einen Gehalt an in Xylol bei 0 °C unlöslicher Fraktion von weniger als 15 Gew.%.

7. Polyolefinzusammensetzung nach Anspruch 1, wobei Propylenhomopolymer- oder -copolymerkomponente B) MIL-Werte von 0,5 bis 9 g/10 min, vorzugsweise 1 bis 8 g/10 min. aufweist, wobei MIL die Schmelzflussrate bei 230 °C unter einer Last von 2,6 kg ist, bestimmt gemäß ISO 1133.

8. Formkörper, das die Polyolefinzusammensetzung der Ansprüche 1 bis 7 umfasst.

9. Formkörper nach Anspruch 8 in Form von Auskleidung.

10. Drehverschluss, umfassend die Auskleidung gemäß Anspruch 9.

11. Drehverschluss nach Anspruch 10 zur Verwendung in Nahrungsmittelbehältern.

12. Drehverscluss nach Anspruch 10 oder 11 in Form eines Press-on/Twist-off-Deckels.

13. Verfahren zur Herstellung der Auskleidung nach Anspruch 9, das die folgenden Schritte umfasst:

a) Ablegen der Polyolefinzusammensetzung im geschmolzenen Zustand auf der Innenfläche des Verschlusses;
b) Formen der abgelegten Polyolefinzusammensetzung.

## Revendications

1. Composition polyoléfinique possédant une enthalpie de fusion $\Delta H_{fus}$, mesurée par DSC au deuxième balayage chauffant, de 7 à 30 J/g, préférablement de 8 à 28 J/g, comprenant :

A) 63 à 78% en poids, préférablement de 64 à 76% en poids, d'un copolymère de butène-1 avec de l'éthylène, possédant une teneur en éthylène copolymérisé de jusqu'à 18% en mole et ne présentant aucun pic de fusion détectable par DSC au deuxième balayage chauffant ;
B) 22 à 37% en poids, préférablement de 24 à 36% en poids, (i) d'un homopolymère de propylène ou (ii) d'un copolymère de propylène ou (iii) d'un mélange de deux ou plus de (i) et de (ii), possédant une température de fusion $T_m$, mesurée par DSC au deuxième balayage chauffant, de 130°C à 165°C, préférablement de 131 à 165°C, plus préférablement de 131 à 160°C ;

les quantités de A) et B) se rapportant au poids total de A) + B) et le deuxième balayage chauffant par DSC étant effectué à une vitesse de chauffage de 10°C par minute.

**2.** Composition polyoléfinique selon la revendication 1, possédant un MIE de 0,5 à 3 g/10 min, MIE étant l'indice de fluidité à chaud à 190°C sous une charge de 2,16 kg, déterminé selon la norme ISO 1133.

**3.** Composition polyoléfinique selon les revendications 1 et 2, possédant un module de flexion égal ou inférieur à 150 MPa.

**4.** Composition polyoléfinique selon les revendications 1 et 2, le constituant copolymère de butène-1 A) possédant une dureté Shore A égale ou inférieure à 80.

**5.** Composition polyoléfinique selon les revendications 1 et 2, comprenant 63 à 69% en poids de A) et 31 à 37% en poids de B).

**6.** Composition polyoléfinique selon la revendication 1, le constituant copolymère de butène-1 A) possédant au moins l'une des caractéristiques supplémentaires suivantes :

- MIE de 0,5 à 3 g/10 min. ;
- une limite inférieure de la teneur en éthylène copolymérisé de 12% en mole ;
- une valeur Shore A égale ou inférieure à 80, en particulier de 80 à 40 ;
- une valeur Shore D égale ou inférieure à 20, en particulier de 20 à 5 ;
- une valeur Mw/Mn, Mw étant la masse molaire moyenne en poids et Mn étant la masse molaire moyenne en nombre, toutes deux mesurées par CPG, égale ou inférieure à 3, en particulier de 3 à 1,5 ;
- une déformation rémanente après allongement à une déformation de 100% à 23°C (ISO 2285) inférieure à 30%, plus préférablement égale ou inférieure à 20% ;
- un pourcentage de motifs de butène-1 sous la forme de pentades isotactiques (mmmm%) supérieur à 80%, préférablement égal ou supérieur à 85%, encore plus préférablement égal ou supérieur à 90% ;
- une contrainte de traction à la rupture, mesurée selon la norme ISO 527, de 3 MPa à 20 MPa, plus préférablement de 4 MPa à 13 MPa ;
- un allongement à la rupture par traction, mesuré selon la norme ISO 527, de 550% à 1000%, plus préférablement de 700% à 1000% ;
- une viscosité intrinsèque (V.I.) égale ou supérieure à 1dl/g, plus préférablement égale ou supérieure à 1,5 dl/g, la limite supérieure étant de 3 dl/g ;
- une cristallinité, mesurée par rayons X, inférieure à 30%, plus préférablement inférieure à 20% ;
- une densité de 0,895 g/cm$^3$ ou moins, plus préférablement de 0,875 g/cm$^3$ ou moins ;
- une teneur en fraction insoluble dans le xylène à 0°C inférieure à 15% en poids.

**7.** Composition polyoléfinique selon la revendication 1, le constituant homopolymère ou copolymère de propylène B) présentant des valeurs MIL de 0,5 à 9 g/10 min, préférablement de 1 à 8 g/10 min, MIL étant l'indice de fluidité à chaud à 230°C sous une charge de 2,6 kg, déterminé selon la norme ISO 1133.

**8.** Articles mis en forme comprenant la composition polyoléfinique selon les revendications 1 à 7.

**9.** Article mis en forme selon la revendication 8, sous la forme d'un revêtement.

**10.** Fermeture à rotation comprenant le revêtement selon la revendication 9.

**11.** Fermeture à rotation selon la revendication 10, pour une utilisation dans des récipients alimentaires.

**12.** Fermeture à rotation selon les revendications 10 ou 11, sous la forme d'un capuchon Press-on/Twist-off®.

**13.** Procédé de préparation du revêtement selon la revendication 9, comprenant les étapes suivantes :

a) pose de la composition polyoléfinique à l'état fondu sur la surface interne de la fermeture ;
b) mise en forme de la composition polyoléfinique déposée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009080485 A
- WO 2004099269 A
- WO 2009000637 A
- US 4399054 A
- US 45977 A
- EP 361493 A
- EP 728769 A
- US 20060020096 A
- WO 98040419 A
- US 5451360 A

### Non-patent literature cited in the description


- **J.C. RANDAL.** *Macromol. Chem Phys.,* 1989, vol. C29, 201
- **M. KAKUGO ; Y. NAITO ; K. MIZUNUMA ; T. MIYATAKE.** *Macromolecules,* 1982, vol. 15, 1150
- **H.N. CHENG.** *Journal of Polymer Science, Polymer Physics Edition,* 1983, vol. 21, 57
- **C.J. CARMAN ; R.A. HARRINGTON ; C.E. WILKES.** *Macromolecules,* 1977, vol. 10, 536
- **ASAKURA T.** *Macromolecules,* 1991, vol. 24, 2334-2340
- **CHUJO R.** *Polymer,* 1994, vol. 35, 339